(19) **Europäisches Patentamt / European Patent Office / Office européen des brevets**

(11) **EP 2 072 286 B1**

(12) # EUROPEAN PATENT SPECIFICATION

(45) Date of publication and mention
of the grant of the patent:
**12.01.2011 Bulletin 2011/02**

(51) Int Cl.:
***B60C 11/12*** *(2006.01)*

(21) Application number: **08171056.8**

(22) Date of filing: **09.12.2008**

(54) **Pneumatic tire tread and mold blade**

Luftreifenlauffläche und Formklinge

Chape de pneu et lame de moulage

(84) Designated Contracting States:
**DE ES FR IT PL TR**

(30) Priority: **20.12.2007 US 15446 P**

(43) Date of publication of application:
**24.06.2009 Bulletin 2009/26**

(73) Proprietor: **The Goodyear Tire & Rubber Company
Akron, OH 44316-0001 (US)**

(72) Inventor: **Scheuren, Daniel
B-6700, Arlon (BE)**

(74) Representative: **Kutsch, Bernd
Goodyear S.A.,
Patent Department,
Avenue Gordon Smith
7750 Colmar-Berg (LU)**

(56) References cited:
**EP-A- 0 705 721    EP-A- 1 782 970
JP-A- 1 095 913    JP-A- 1 101 205
JP-A- 4 197 809    JP-A- 5 254 314
JP-A- 6 143 943    JP-A- 6 320 913
JP-A- 7 285 303    JP-A- 8 048 115**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the Invention

The present invention is directed to a pneumatic tire having sipes or narrow grooves. More particularly, the present invention is directed to a tire tread wherein the bottom of a sipe or narrow groove is designed to significantly improve the resistance to fatigue cracks.

Background of the Invention

Tires commonly utilize sipes or narrow grooves in the tire tread for wet traction or better grip on snow for instance. When the sipes or narrow grooves increase in size and depth, fatigue cracks in the tread block may occur at the sipe bottom. This may be caused by fatigue due to repeated cyclic loading caused for instance by braking torque.
When the sipe or narrow groove depth increases, this makes it more difficult to extract a blade from the cured tire in the mold without damaging the tire.
Further, depending upon the shape of narrow grooves or sipes, rubber may chunk at the intersection of sipes and grooves.
Thus an improved blade and geometrical configuration of sipes or narrow groove is desired, which alleviates all the disadvantages described above.
JP-A-05-254314 describes a pneumatic tire for heavy load comprising a sipe which has a basically round cross section at its radially inner end.

Summary of the Invention

The invention relates to a tire tread according to claim 1, a tire according to claim 8 and a blade according to claim 9.
Dependent claims refer to preferred embodiments of the invention.
In a first aspect, the invention provides a tire tread, the tread having at least one circumferentially extending or laterally extending main groove, the maximum radial depth of the at least one main groove defining a non-skid tread depth, the at least one main groove partially forming at least one tread element, the at least one tread element having a sipe therein, wherein the sipe has a first portion, a second radiused portion, and a transition section located between the first portion and the second portion, the transition section having a curved surface with an outer radius that has a center external to the sipe, wherein the radius of the transition section ranges from 0.5 mm to 8 mm and wherein the radius of the second portion ranges from 0.5 to 5 mm, wherein the ratio of the outer radius to the inner radius is in a range of from 0.3 to 4.
In another aspect, the invention provides a blade for molding a tire, the blade comprising a first portion and a second preferably circular portion having a radius $r_2$, and a curved transition section located between the first portion and the second portion, the transition section having an outer radius $r_1$ that has a center external to the sipe, wherein the ratio $r_1/r_2$ ranges from 0.3 to 4, more preferably 1 to 3 or 1.5 to 2.5 such as 2.
In another aspect, the invention provides a tire tread, the tread having at least one circumferentially extending or laterally extending main groove, the maximum radial depth of the at least one main groove defining a non-skid tread depth, the at least one main groove partially forming at least one tread element, the at least one tread element having a sipe therein, wherein the sipe has a first portion, a second radiused portion having a radius $r_2$, and a transition section located between the first portion and the second portion, the transition section having a curved surface with an outer radius $r_1$ that has a center external to the sipe, wherein the ratio of $r_1/r_2$ ranges from 0.3 to 4, more preferably 1 to 3 or 1.5 to 2.5 such as 2.

Definitions

The following definitions are controlling for the disclosed invention.
"Blade" means a protrusion in a tire curing mold that forms part of the tread design. The protrusion forms a corresponding depression in the finished tire tread.
"Groove" means an elongated void area in a tread that may extend circumferentially or laterally about the tread in a straight, curved, or zigzag manner. Circumferentially and laterally extending grooves sometimes have common portions and are sub classified as "wide" or "narrow."
A "narrow groove" has a width greater than a sipe, but less than or equal to 4.0 mm. Preferably, the width is in a range of from 1.0 mm to 3.0 mm.
A "wide groove" has a width greater than 4.0 mm.

The groove width is equal to tread surface area occupied by a groove or groove portion, the width of which is in question, divided by the length of such groove or groove portion. Thus, the groove width is its average width over its length.

"Radial" and "radially" are used to mean directions radially toward or away from the axis of rotation of the tire.

"Sipes" refer to very narrow grooves molded into tread elements of a tire that subdivide tread elements. Sipes have a width in the range of from 0.3 mm to 1.0 mm. The width of a sipe is such that the sipe tends to close completely in a tire footprint.

Brief Description of the Drawings

The invention will be described by way of example and with reference to the accompanying drawings in which:

FIG. 1 is a perspective view of a tread element in accordance with the invention;
FIG. 2 is an exemplary blade used to form one embodiment of the invention;
FIG. 3 is a cross-sectional view of the blade of Figure 2;
FIG. 4 is an enlarged cross-sectional view of the lower blade portion of Fig. 3;
FIGS. 5A-5D illustrate example blade cross-sectional views with a blade thickness of 0.8 mm, an $r_2$ radius of 1.5 mm, and illustrate a $r_1$ radius of: 1 mm (Fig. 5A), 1.5 mm (Fig. 5B), 3.0 mm (Fig. 5C), and 6 mm(Fig. 5D), respectively ;
FIG. 6A-6D illustrate example blade cross-sectional views, each with a blade thickness of 0.5 mm, an $r_2$ radius of 1.5 mm, and illustrate an $r_1$ radius of: 1 mm (Fig. 6A), 1.5 mm (Fig. 6B), 3.0 mm (Fig. 6C), and 6 mm(Fig. 6D), respectively ;
FIG. 7A-7D illustrate example blade cross-sectional views, each view with a blade thickness of 0.8 mm, an $r_2$ radius of 2.4 mm, and an $r_1$ radius of: 1 mm (Fig. 7A), 1.5 mm (Fig. 7B), 3.0 mm (Fig. 7C), and 6 mm(Fig. 7D), respectively;
FIG. 8 illustrates a second embodiment of a blade of the invention; and
FIG. 9 illustrates the cross-sectional view of the blade of FIG. 8.

Detailed Description of the Invention

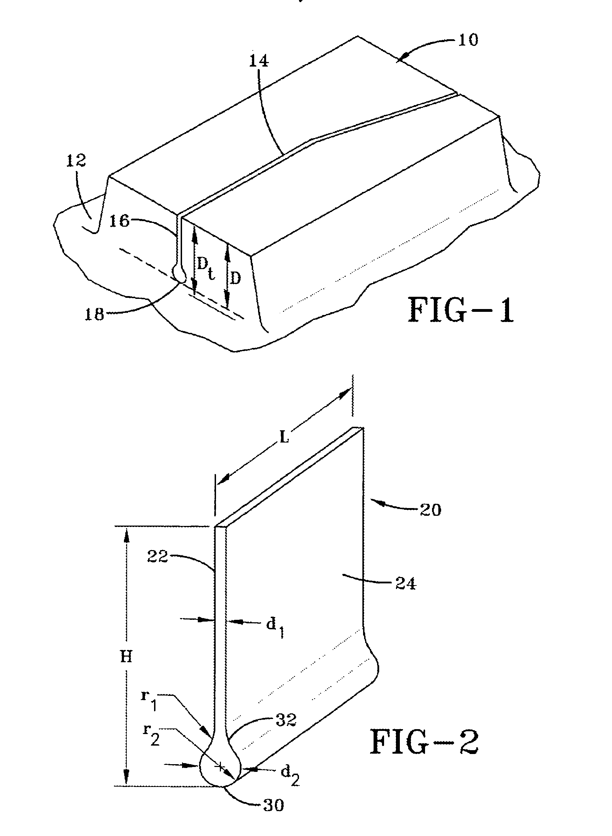

FIG. 1 is a tread element 10 for a pneumatic tire tread. As appreciated by those skilled in the art, the tread element 10 is formed by at least one groove 12, the groove 12 being either a circumferentially extending or laterally extending groove. If the tread element 10 is defined by only circumferentially extending grooves, the tread element will be a tread rib. If the tread element 10 is formed by grooves on at least three sides, the tread element 10 is considered a tread block. The tread element 10 may be located in any position on the tread surface, i.e. along a tread shoulder, along the centerline, or an intermediate position. The depth of the grooves 12 forming the tire tread elements defines the non-skid depth $D_t$ of the tread. If there are grooves of differing depths, the maximum groove depth will define the non-skid depth of the tread.

Located within the tread element 10 is at least one sipe 14. Alternatively, the sipe may be a narrow groove having a width of preferably from 1.0 mm to 3.0 mm, more preferably from 1.0 to 2.0 mm. In the preferred embodiment however, the tread element comprises a sipe 14. The sipe 14 is illustrated as subdividing the tread element 10 into two portions; however, the tread element 10 may have multiple sipes 14. The sipe 14 may be straight, curved or have a general inclination in either the lateral or circumferential direction of the tire; the exact orientation of the sipe 14 relative to the tread is within the purview of the tread designer.

The sipe 14 has a radially outer portion 16 having a width $d_1$ which is in the example in the range of from 0.3 to 1.0 mm, more preferably 0.5 to 0.8 mm. Preferably, the width $d_1$ is constant; however, the width of the radially outer sipe portion may also vary. The sipe further comprises a radially inner portion 18 that has a diameter $d_2$ (or maximum width) which is larger than $d_1$, and may be in the range of from 1.0 to 10.0 mm, more preferably in the range of from 2 to 6 mm, and most preferably in the range of from 2 to 4 mm. The width range upper limit of the radially inner sipe portion 18 is limited by the ability to demold the tire and remove the forming blade without destroying the radially outer sipe portion 16.

In a preferred embodiment of the invention, the following relationship applies to the blade: $d_1 < d_2 < 8 * d_1$. In an other embodiment, the relationship $d_2 \geq 2 * d_1$, preferably $d_2 \geq 2.5 * d_1$ applies. For example, $d_1$ may be 0.8 mm, and $d_2$ may be 3 mm.

The sipe 14 may be formed from a mold blade 20 as shown in Figure 2. During molding of the tire tread, the blade 20 forms a sipe 14 that has a profile corresponding to the blade configuration. Thus, in the following discussion, references to the blade pattern and dimensions are also applicable to the sipe 14 formed therefrom and may be so referred to.

The sipe (or narrow groove) 14 extends to a full sipe depth D in the tread block which is shown in Fig. 1 as being less than the non-skid depth $D_t$. However, $D_t$ may also be equal or larger than D as described later.

The blade 20 is typically formed of metal such as steel. The blade, depending upon the shape, may be direct milled, cast or formed by stamping or embossing. The blade 20 comprises a first portion 22 that has a maximum width $d_1$ in the range of 0.3 mm to 0.8 mm, more preferably 0.5 to 0.8 mm. Preferably, the width $d_1$ is constant; however, the width of the radially outer blade portion may also vary. In a first embodiment, the first portion 22 is formed from a flat, planar plate 24 having a defined length L, height H and thickness $d_1$. As described below, the first portion may also be curved or have three dimensional projections, or combinations thereof. The mold blade 20 further comprises a second portion 30 that is typically located on one end (i.e. the radially inner end) of the plate 24. The second portion 30 preferably comprises an enlarged, rounded cross section or bulbous shape or, as the inventor would describe it, most preferably the shape of a falling rain drop. The second portion 30 is joined to the first portion 22 with no corners or discontinuities. Preferably, the second portion is joined to the first portion 22 with a transition portion 32 defining a radiused smooth transition having its center located outside the second portion 30. The transition portion comprises a radius $r_1$ in the range of from 0.5 to 8 mm, more preferably 0.5 mm to 5 mm or 1 to 3 mm. The second portion radius $r_2$ preferably ranges from 0.5 mm or greater, more typically 0.5 mm to 5 mm, and most preferably 1.5 mm to 2.5 mm. The ratio of the transition radius to the second portion radius, $r_1/r_2$ preferably ranges from 0.1 to 16, and more preferably from 0.3 to 4. In a preferred embodiment, the relation $d_2 = 2 \ast r_2$ applies.

In one preferred aspect of the invention, the second portion radius $r_2$ is the maximum radius of a circle located inside of the second portion of the blade or sipe 14 wherein this circle is tangent at at least one point to the circumferential line of the second portion 18, 30 but does not intersect the second portion 18, 30 or this circumferential line. In an other preferred aspect of the invention, the second portion radius $r_2$ is the internal radius of curvature at the radially innermost point of the second portion 18, 30. Both criteria may apply.

In one preferred aspect of the invention, the radius $r_1$ at the transition section 32 is the maximum radius of a circle located outside the curved surface of the transition section 32 wherein this circle is tangent at at least one point to the circumferential line of the transition section 32 but does not intersect the transition section 32 or this circumferential line. Preferably, the circle having the radius $r_1$ does neither intersect the first portion 16, 22 nor the second portion 18, 30. In an other preferred aspect of the invention, the radius $r_1$ is the smallest external radius of curvature of the transition portion 32. Both criteria may apply.

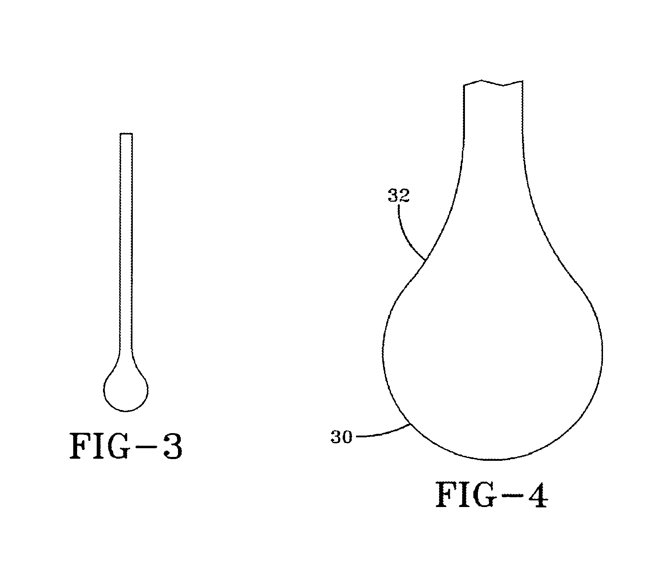

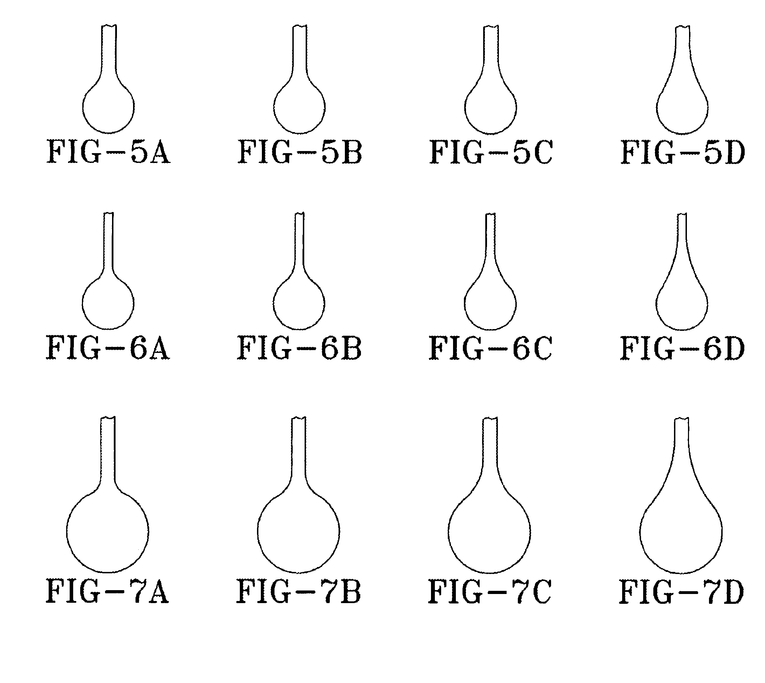

Figures 5A-5D illustrate a cross-sectional view of the transition portion and the second portion, wherein the blade has a thickness of 0.8 mm and a bulb radius $r_2$ of 1.5 mm. The transition radius $r_1$ varies from 1 mm as shown in Fig 5A, 1.5 mm in Fig. 5B, 3.0 mm in Fig. 5C, and 6 mm in Fig 5D. As the transition radius increases, the transition section elongates. Figures 6A through 6D illustrate a blade depth of 0.5 mm, a second portion radius $r_2$ of 1.5 mm, and the transition radius $r_1$ varies from 1 mm as shown in Fig 6A, 1.5 mm in Fig. 6B, 3.0 mm in Fig. 6C, and 6 mm in Fig 6D. Figures 7A-7D illustrate a much larger bulb radius $r_2$ of 2.4 mm, with a blade thickness of 0.8 mm. The transition radius $r_1$ varies from 1 mm as shown in Fig 7A, 1.5 mm in Fig. 7B, 3.0 mm in Fig. 7C, and 6 mm in Fig 7D. As the transition radius increases, a more distinct and elongated transition section is created, that looks like a falling raindrop.

The blade 20 of the above described embodiment may also be straight, curved or angled along its length L.

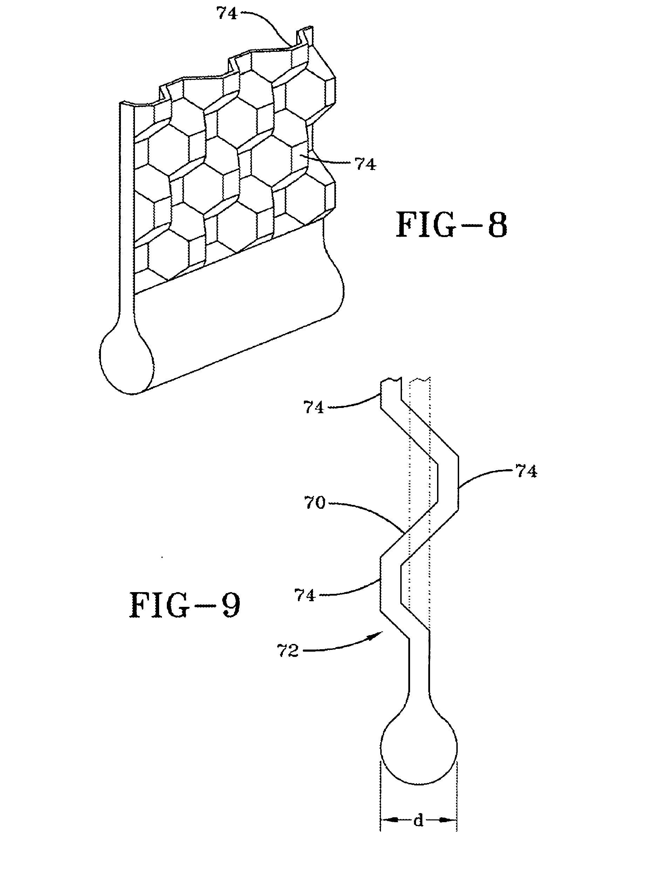

Figures 8 and 9 illustrate a second embodiment of the invention. The blade is the same as above, except for the following differences. The blade first portion 70 is not smooth and flat. The planar first portion comprises a plurality of projections 72 and recessed portions. The top portion of the projection 74 may be flat or planar. The recessed portions may extend into the opposite direction of the projection 74, and have a flat recessed portion 74. Alternatively, the top portion of the projection may be rounded (not shown). The projections may be aligned in one or more rows. If two or more radially adjacent rows are utilized, the projections may be aligned or staggered such that the centers of the projections are offset. The projections may be spaced apart with planar sections (not shown) or the projections may be closely spaced as shown. The projections may vary in shape, or be the same shape.

Figure 8 illustrates one example of the cross-sectional shape of the projections 74 wherein the top portion of the projection is flat or planar. Alternatively, the top portion of the projection may be rounded.

The invention is not limited to a sipe. The preferably used shape of the raindrop may also be applied to a narrow groove.

In Figures 1 and 2, the radially outer sipe portion 16 having the narrow sipe width is the radially outer 40 to 95% depth of the full sipe depth D. Preferably, the sipe portion first 16 has a depth of 60-95%, more preferably 70-90%, such as 75% to 85% of the upper portion of the full sipe depth D. The radially inner sipe portion 18 having the width $d_2$ preferably is the radially inner 5 to 40% of the full sipe depth D. Preferably, the radially innersipe portion 18 is the radially inner 10 to 30% depth, such 25% to 15% of the full sipe depth D.

Also, in accordance with the invention, the radially outer sipe portion 16 may have a three dimensional configuration wherein the opposing sipe walls 20, 22 interlock against one another as the tread element 10 passes through the tire footprint (see Fig. 8 and Fig. 9). The three dimensional configuration may be defined as three dimensional relative to a theoretical sipe centerline, the sipe centerline extending from one sipe end to the opposing sipe end. The radially outer sipe portion 16 of FIG. 1 may be straight, wavy, or sinusoidal, configuration. The sinusoidal configuration may have more sharp, or defined, peaks, creating a zig-zig configuration.

In a preferred embodiment, the radially inner sipe portion 18 has a substantially straight configuration with a constant depth. By substantially straight configuration, it is intended that the base of the evolving sipe 14 may have a slight curvature, but any curvature is significantly less then any curvature of the radially outer sipe portion 16.

Alternatively, the three dimensional configuration of the radially outer sipe portion 16 may be formed by a series of alternating recesses and protrusions extending from each side of the sipe centerline. One exemplary balde for such a sipe is illustrated in FIG. 8 or FIG. 9. The upper portion of the blade, and specifically, the blade portion that forms the radially outer sipe portion 16, has a plurality of alternating recesses and protrusions extending from each side of the blade. In the resulting sipe, the upper sipe portion 16 is three dimensional, but maintains a constant sipe width. The inner portion of the blade has a width substantially greater than the outer portion width, and within the above discussed ranges. The intermediate portion has a constantly increasing width, and is preferably characterized as being symmetrical along the length of the evolving sipe, relative to the sipe centerline.

Additionally, the invention as described in the embodiments above is not limited to forming a sipe 14 or a narrow groove having a depth D being smaller than the non-skid tread depth $D_t$. The sipe depth D is preferably in the range of 50-95%, more preferably 75 to 95%, such as 80 to 90% of the nonskid tread depth $D_t$. When, on the other hand, the sipe depth D is equal or greater than the non-skid tread depth $D_t$, the presence of the groove formed by the evolving sipe 14 is ensured during the entire useful life of the tire tread.

In one embodiment, the sipe is not going beyond the non-skid depth, i.e. $D \leq Dt$. However, the range can also be:

$$0.3 * D_t \leq D \leq 1.25 * D_t$$

or:

$$0.5 * D_t \leq D \leq 0.95 * D_t$$

or:

$$0.75 * D_t \leq D \leq 0.9 * D_t \ \text{such as} \ D = 0.80 * D_t \ \text{or} \ D = 0.85 * D_t$$

If D is larger than $D_t$, preferably the following ratios apply:

$$1.25 * D_t \leq D \leq 1.05 * D_t$$

or

$$1.15 * D_t \leq D \leq 1.1 * D_t$$

**Claims**

1. A tire tread, the tread having at least one circumferentially extending or laterally extending main groove (12), the maximum radial depth of the at least one main groove (12) defining a non-skid tread depth ($D_t$), the at least one main groove (12) at least partially forming at least one tread element (10), the at least one tread element (10) having a sipe (14) or narrow groove therein, wherein the sipe (14) or narrow groove comprises a radially extending first portion (16), a radially extending second portion (18), and radially extending transition section (32) located between the first portion (16) and the second portion (18), wherein

   (i) the second portion (18) is a radiused portion with an inner radius ($r_2$) in a range of from 0.5 mm to 5 mm, wherein the transition section (32) comprises a curved surface with an outer radius ($r_1$) in a range of from 0.5 mm to 8 mm that has a center external to the sipe (14) or narrow groove, **characterized in that** the ratio of the

outer radius ($r_1$) to the inner radius ($r_2$) is in a range of from 0.3 to 4; or wherein
(ii) the second portion (18) is a radiused portion a with an inner radius ($r_2$), wherein the transition section (32) comprises a curved surface with an outer radius ($r_1$) that has a center external to the sipe (14) or narrow groove, **characterized in that** the ratio of the outer radius ($r_1$) to the inner radius ($r_2$) is in a range of from 0.3 to 4.

2. The tire tread of claim 1 wherein the first portion (16) is located radially outwards of the second portion (18).

3. The tire tread of claim at least one of the previous claims wherein the first portion (16) has a constant width ($d_1$) which is less than the maximum width ($d_2$) of the second portion (18).

4. The tread of at least one of the previous claims wherein the first portion (16) extends radially and/or laterally or circumferentially in a substantially straight configuration.

5. The tread of at least one of the previous claims wherein the first portion (16) has a three dimensional configuration, said three dimensional configuration preferably comprising a series of protrusions (74) and recesses.

6. The tread of claim 1 wherein the ratio of the outer radius ($r_1$) to the inner radius ($r_2$) is in a range of from 1 to 3.

7. The tread of at least one of the previous claims wherein the first portion (16) has a constant width ($d_1$) and the second portion (18) has a maximum width ($d_2$) and wherein at least one of the following relations applies:

   (i) $d_1 < d_2 < 8\,{}^*d_1$
   (ii) $d_2 \geq 2^*d_1$
   (iii) $d_2 = 2\,{}^*r_2$

8. A pneumatic tire comprising a tire tread according to one of the previous claims.

9. A blade for molding a tire, the blade (20) comprising a radially extending first portion (22), a radially extending second portion (30), and a transition section (32) located between the first portion (22) and the second portion (30), wherein:

   (i) the second portion (30) is a radiused portion with an inner radius ($r_2$) in a range of from 0.5 mm to 5 mm, wherein the transition section (32) comprises a curved surface with an outer radius ($r_1$) in a range of from 0.5 mm to 8 mm that has a center external to the blade (20), **characterized in that** the ratio of the outer radius ($r_1$) to the inner radius ($r_2$) is in a range of from 0.3 to 4; or wherein
   (ii) the second portion (30) is a radiused portion with an inner radius ($r_2$), wherein the transition section (32) comprises a curved surface with an outer radius ($r_1$) that has a center external to the blade (20), **characterized in that** the ratio of the outer radius ($r_1$) to the inner radius ($r_2$) is in a range of from 0.3 to 4.

10. The blade of claim 9 wherein the ratio of the outer radius ($r_1$) to the inner radius ($r_2$) is in a range of from 1 to 4.

11. The blade of claim 10 wherein the ratio is in a range of from 1 to 3.

12. The blade of claim 10 wherein the ratio is in a range of from 1.5 to 2.5.

13. The blade of at least one of the previous claims 9 to 12 wherein the first portion (22) of has a three dimensional configuration, said three dimensional configuration preferably comprising a series of protrusions (74) and recesses.

14. The blade of at least one of the claims 9 to 13 wherein the blade (20) has a length (L) and is angled or curved with respect to its length.

15. The blade of at least one of the previous claims 9 to 14 wherein the first portion (22) has a constant width ($d_1$) and the second portion has a maximum width ($d_2$) and wherein at least one of the following relations applies:

    (i) $d_1 < d_2 < 8^*d_1$
    (ii) $d_2 \leq 2^*d_1$
    (iii) $d_2 = 2^*r_2$

**Patentansprüche**

1. Reifenlauffläche, wobei die Lauffläche mindestens eine sich in Umfangsrichtung erstreckende oder seitwärts erstreckende Hauptrille (12) aufweist, wobei die maximale radiale Tiefe der mindestens einen Hauptrille (12) eine Laufflächenprofiltiefe ($D_t$) definiert, wobei die mindestens eine Hauptrille (12) mindestens teilweise mindestens ein Profilelement (10) bildet, wobei das mindestens eine Profilelement (10) einen Feineinschnitt (14) oder eine schmale Rille darin aufweist, wobei der Feineinschnitt (14) oder die schmale Rille einen sich radial erstreckenden ersten Teil (16), einen sich radial erstreckenden zweiten Teil (18) und einen zwischen dem ersten Teil (16) und dem zweiten Teil (18) befindlichen, sich radial erstreckenden Übergangsabschnitt (32) umfasst, wobei

   (i) der zweite Teil (18) ein mit einem Radius versehener Teil mit einem Innenradius ($r_2$) in einem Bereich von 0,5 mm bis 5 mm ist, wobei der Übergangsabschnitt (32) eine gekrümmte Oberfläche mit einem Außenradius ($r_1$) in einem Bereich von 0,5 mm bis 8 mm umfasst, der einen Mittelpunkt außerhalb des Feineinschnitts (14) oder der schmalen Rille aufweist, **dadurch gekennzeichnet, dass** das Verhältnis des Außenradius ($r_1$) zu dem Innenradius ($r_2$) in einem Bereich von 0,3 bis 4 liegt; oder wobei
   (ii) der zweite Teil (18) ein mit einem Radius versehener Teil mit einem Innenradius ($r_2$) ist, wobei der Übergangsabschnitt (32) eine gekrümmte Oberfläche mit einem Außenradius ($r_1$) umfasst, der einen Mittelpunkt außerhalb des Feineinschnitts (14) oder der schmalen Rille aufweist, **dadurch gekennzeichnet, dass** das Verhältnis des Außenradius ($r_1$) zu dem Innenradius ($r_2$) in einem Bereich von 0,3 bis 4 liegt.

2. Reifenlauffläche nach Anspruch 1, wobei der erste Teil (16) radial auswärts von dem zweiten Teil (18) angeordnet ist.

3. Reifenlauffläche nach mindestens einem der vorgenannten Ansprüche, wobei der erste Teil (16) eine konstante Breite ($d_1$) aufweist, die weniger als die maximale Breite ($d_2$) des zweiten Teils (18) beträgt.

4. Lauffläche nach mindestens einem der vorgenannten Ansprüche, wobei der erste Teil (16) sich radial und/oder seitlich oder in Umfangsrichtung in einer im Wesentlichen geraden Konfiguration erstreckt.

5. Lauffläche nach mindestens einem der vorgenannten Ansprüche, wobei der erste Teil (16) eine dreidimensionale Konfiguration hat, wobei diese dreidimensionale Konfiguration bevorzugt eine Serie von Vorsprüngen (74) und Ausnehmungen umfasst.

6. Lauffläche nach Anspruch 1, wobei das Verhältnis des Außenradius ($r_1$) zu dem Innenradius ($r_2$) in einem Bereich von 1 bis 3 liegt.

7. Lauffläche nach mindestens einem der vorgenannten Ansprüche, wobei der erste Teil (16) eine konstante Breite ($d_1$) hat und der zweite Teil (18) eine maximale Breite ($d_2$) hat, und wobei mindestens eine der folgenden Beziehungen gilt:

   (i) $d_1 < d_2 < 8 \cdot d_1$
   (ii) $d_2 \geq 2 \cdot d_1$
   (iii) $d_2 = 2 \cdot r_2$

8. Luftreifen, umfassend eine Reifenlauffläche gemäß einem der vorgenannten Ansprüche.

9. Klinge zum Formen eines Reifens, wobei die Klinge (20) einen sich radial erstreckenden ersten Teil (22), einen sich radial erstreckenden zweiten Teil (30) und einen zwischen dem ersten Teil (22) und dem zweiten Teil (30) angeordneten Übergangsabschnitt (32) umfasst, wobei:

   (i) der zweite Teil (30) ein mit einem Radius versehener Teil mit einem Innenradius ($r_2$) in einem Bereich von 0,5 mm bis 5 mm ist, wobei der Übergangsabschnitt (32) eine gekrümmte Oberfläche mit einem Außenradius ($r_1$) in einem Bereich von 0,5 mm bis 8 mm umfasst, der einen Mittelpunkt außerhalb der Klinge (20) aufweist, **dadurch gekennzeichnet, dass** das Verhältnis des Außenradius ($r_1$) zu dem Innenradius ($r_2$) in einem Bereich von 0,3 bis 4 liegt; oder wobei
   (ii) der zweite Teil (30) ein mit einem Radius versehener Teil mit einem Innenradius ($r_2$) ist, wobei der Übergangsabschnitt (32) eine gekrümmte Oberfläche mit einem Außenradius ($r_1$) umfasst, der einen Mittelpunkt außerhalb der Klinge (20) aufweist, **dadurch gekennzeichnet, dass** das Verhältnis des Außenradius ($r_1$) zu dem Innenradius ($r_2$) in einem Bereich von 0,3 bis 4 liegt.

**10.** Klinge nach Anspruch 9, wobei das Verhältnis des Außenradius ($r_1$) zu dem Innenradius ($r_2$) in einem Bereich von 1 bis 4 liegt.

**11.** Klinge nach Anspruch 10, wobei das Verhältnis in einem Bereich von 1 bis 3 liegt.

**12.** Klinge nach Anspruch 10, wobei das Verhältnis in einem Bereich von 1,5 bis 2,5 liegt.

**13.** Klinge nach mindestens einem der vorgenannten Ansprüche 9 bis 12, wobei der erste Teil (22) eine dreidimensionale Konfiguration hat, wobei diese dreidimensionale Konfiguration bevorzugt eine Serie von Vorsprüngen (74) und Ausnehmungen umfasst.

**14.** Klinge nach mindestens einem der Ansprüche 9 bis 13, wobei die Klinge (20) eine Länge (L) aufweist und in Bezug auf ihre Länge angewinkelt oder gekrümmt ist.

**15.** Klinge nach mindestens einem der vorgenannten Ansprüche 9 bis 14, wobei der erste Teil (22) eine konstante Breite ($d_1$) aufweist und der zweite Teil eine maximale Breite ($d_2$) aufweist, und wobei mindestens eine der folgenden Beziehungen gilt:

(i) $d_1 < d_2 < 8 * d_1$
(ii) $d_2 \geq 2 * d_1$
(iii) $d_2 = 2 * r_2$

**Revendications**

**1.** Bande de roulement pour bandage pneumatique, la bande de roulement possédant au moins une rainure principale (12) s'étendant en direction circonférentielle ou s'étendant en direction latérale, la profondeur radiale maximale de ladite au moins une rainure principale (12) définissant une profondeur de sculpture de bande de roulement ($D_t$), ladite au moins une rainure principale (12) formant au moins en partie au moins un élément de bande de roulement (10), une lamelle (14) ou une rainure étroite étant prévue dans ledit au moins un élément de bande de roulement (10), la lamelle (14) ou la rainure étroite comprenant une première portion (16) s'étendant en direction radiale, une deuxième portion (18) s'étendant en direction radiale et une section de transition (32) s'étendant en direction radiale, qui vient se disposer entre la première portion (16) et la deuxième portion (18), dans laquelle

(i) la deuxième portion (18) possède une portion arrondie comprenant un rayon interne ($r_2$) dans la plage de 0,5 mm à 5 mm, la section de transition (32) comprenant une surface courbe dont le rayon externe ($r_1$) se situe dans la plage de 0,5 mm à 8 mm et dont le centre est situé à l'extérieur de la lamelle (14) ou de la rainure étroite, **caractérisée en ce que** le rapport du rayon externe ($r_1$) au rayon interne ($r_2$) se situe dans la plage de 0,3 à 4 ; ou dans laquelle

(ii) la deuxième portion (18) possède une portion arrondie comprenant un rayon interne ($r_2$), la section de transition (32) comprenant une surface courbe dont le rayon externe ($r_1$) dont le centre est situé à l'extérieur de la lamelle (14) ou de la rainure étroite, **caractérisée en ce que** le rapport du rayon externe ($r_1$) au rayon interne ($r_2$) se situe dans la plage de 0,3 à 4.

**2.** Bande de roulement pour bandage pneumatique selon la revendication 1, dans laquelle la première portion (16) est située à l'extérieur, en direction radiale, de la deuxième portion (18).

**3.** Bande de roulement pour bandage pneumatique selon au moins une des revendications précédentes, dans laquelle la première portion (16) possède une largeur constante ($d_1$) qui est inférieure à la largeur maximale ($d_2$) de la deuxième portion (18).

**4.** Bande de roulement pour bandage pneumatique selon au moins une des revendications précédentes, dans laquelle la première portion (16) s'étend en direction radiale et/ou en direction latérale ou en direction circonférentielle dans une configuration essentiellement rectiligne.

**5.** Bande de roulement pour bandage pneumatique selon au moins une des revendications précédentes, dans laquelle la première portion (16) possède une configuration en trois dimensions, ladite configuration en trois dimensions comprenant de préférence une série de saillies (74) et d'évidements.

**6.** Bande de roulement pour bandage pneumatique selon la revendication 1, dans laquelle le rapport du rayon externe ($r_1$) au rayon interne ($r_2$) se situe dans la plage de 1 à 3.

**7.** Bande de roulement pour bandage pneumatique selon au moins une des revendications précédentes, dans laquelle la première portion (16) possède une largeur constante ($d_1$) et la deuxième portion (18) possède une largeur maximale ($d_2$) et dans laquelle au moins une des équations suivantes est d'application :

(i) $d_1 < d_2 < 8 * d_1$
(ii) $d_2 \geq 2 * d_1$
(iii) $d_2 = 2 * r_2$

**8.** Bandage pneumatique comprenant une bande de roulement pour bandage pneumatique selon l'une quelconque des revendications précédentes.

**9.** Lame pour le moulage d'un bandage pneumatique, la lame (20) comprenant une première portion (22) s'étendant en direction radiale, une deuxième portion (30) s'étendant en direction radiale et une section de transition (32) s'étendant en direction radiale, qui vient se disposer entre la première portion (22) et la deuxième portion (30), dans laquelle

(i) la deuxième portion (30) possède une portion arrondie comprenant un rayon interne ($r_2$) dans la plage de 0,5 mm à 5 mm, la section de transition (32) comprenant une surface courbe dont le rayon externe ($r_1$) se situe dans la plage de 0,5 mm à 8 mm et dont le centre est situé à l'extérieur de la lamelle (14) ou de la rainure étroite, **caractérisée en ce que** le rapport du rayon externe ($r_1$) au rayon interne ($r_2$) se situe dans la plage de 0,3 à 4 ; ou dans laquelle
(ii) la deuxième portion (30) possède une portion arrondie comprenant un rayon interne ($r_2$), la section de transition (32) comprenant une surface courbe dont le rayon externe ($r_1$) dont le centre est situé à l'extérieur de la lamelle (14) ou de la rainure étroite, **caractérisée en ce que** le rapport du rayon externe ($r_1$) au rayon interne ($r_2$) se situe dans la plage de 0,3 à 4.

**10.** Lame selon la revendication 9, dans laquelle le rapport du rayon externe ($r_1$) au rayon interne ($r_2$) se situe dans la plage de 1 à 4.

**11.** Lame selon la revendication 10, dans laquelle le rapport se situe dans la plage de 1 à 3.

**12.** Lame selon la revendication 10, dans laquelle le rapport se situe dans la plage de 1,5 à 2,5.

**13.** Lame selon l'une quelconque des revendications 9 à 12, dans laquelle la première portion (22) possède une configuration en trois dimensions, ladite configuration en trois dimensions comprenant de préférence une série de saillies (74) et d'évidements.

**14.** Lame selon l'une quelconque des revendications 9 à 13, dans laquelle la lame (20) possède une longueur (L) et forme un angle ou une courbure par rapport à sa longueur.

**15.** Lame selon l'une quelconque des revendications 9 à 14, dans laquelle la première portion (22) possède une largeur constante ($d_1$) et la deuxième portion possède une largeur maximale ($d_2$) et dans laquelle au moins une des équations suivantes est d'application :

(i) $d_1 < d_2 < 8 * d_1$
(ii) $d_2 \geq 2 * d_1$
(iii) $d_2 = 2 * r_2$

FIG-1

FIG-2

FIG—3

FIG—4

FIG—5D

FIG—6D

FIG—7D

FIG—5C

FIG—6C

FIG—7C

FIG—5B

FIG—6B

FIG—7B

FIG—5A

FIG—6A

FIG—7A

74

74

FIG-8

74

74

70

74

72

d

FIG-9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5254314 A